(19) Europäisches Patentamt
European Patent Office
Office européen des brevets

(11) **EP 4 241 112 B1**

(12) **EUROPÄISCHE PATENTSCHRIFT**

(45) Veröffentlichungstag und Bekanntmachung des Hinweises auf die Patenterteilung:
**03.06.2026 Patentblatt 2026/23**

(21) Anmeldenummer: **21805935.0**

(22) Anmeldetag: **03.11.2021**

(51) Internationale Patentklassifikation (IPC):
**G01S 1/02** (2010.01)   **G01S 5/02** (2010.01)
**G01S 11/02** (2010.01)

(52) Gemeinsame Patentklassifikation (CPC):
**G01S 11/02; G01S 1/024; G01S 1/026; G01S 5/021**

(86) Internationale Anmeldenummer:
**PCT/EP2021/080520**

(87) Internationale Veröffentlichungsnummer:
**WO 2022/096511 (12.05.2022 Gazette 2022/19)**

(54) **VERFAHREN ZUR EINSEITIGEN FUNKBASIERTEN ENTFERNUNGSMESSUNG**

METHOD FOR ONE-SIDED RADIO-BASED DISTANCE MEASUREMENT

MÉTHODE DE MESURE DE LA DISTANCE PAR RADIO UNILATÉRALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2020 PCT/EP2020/081016**
**04.11.2020 PCT/EP2020/081015**

(43) Veröffentlichungstag der Anmeldung:
**13.09.2023 Patentblatt 2023/37**

(73) Patentinhaber: **Lambda: 4 Entwicklungen GmbH**
**22299 Hamburg (DE)**

(72) Erfinder: **REIMANN, Rönne**
**22769 Hamburg (DE)**

(74) Vertreter: **Raffay & Fleck**
**Patentanwälte**
**Stephansplatz 2-6**
**20354 Hamburg (DE)**

(56) Entgegenhaltungen:
EP-A1- 1 650 581          EP-A1- 3 502 736
EP-A1- 3 564 703          WO-A1-2014/130196
WO-A1-2019/238789          WO-A1-2020/156939
WO-A1-2020/165134          US-A1- 2012 019 413

EP 4 241 112 B1

**Beschreibung**

Die Erfindung betrifft ein Verfahren zur einseitigen funkbasierten Entfernungsmessung.

Es ist bekannt, aus dem Austausch von Funksignalen zwischen zwei Objekten die Entfernung zwischen den Objekten zu bestimmen.

Auch ist es bekannt, Zeitgeber in zwei Objekten zu synchronisieren, sowohl über kabelgebundene als auch kabellose Verbindungen. So existiert beispielsweise das NTP Protokoll. Auch ist im Rahmen einer Bluetoothverbindung eine Synchronisation vorgesehen, in der jedes Objekt eine frei laufende 28 bit Uhr mit einem Takt von 3,2 kHz aufweist und jedes Objekt sein Offset zu einer zentralen Uhr ermittelt und diesen regelmäßig korrigiert. Hier wird eine Synchronisation mit einer Genauigkeit von etwa 125 ns erreicht. Auch ist eine verbesserte Zeitsynchronisation bekannt, beispielsweise aus der DE112014004426T5 oder "Synchronization in Wireless Sensor Networks Using Bluetooth", Casas et al., Third International Workshop on Intelligent Solutions in Embedded Systems, 2005., ISBN: 3-902463-03-1. Dies kann beispielsweise zur Energieeinsparung genutzt werden, indem ein Objekt nur zu bestimmten Zeitschlitzen empfangsbereit gehalten wird, die dem anderen Objekt bekannt sind, um zu entsprechenden Zeiten zu senden. Die Synchronisation der Uhren ist auch zumindest bei einseitiger relativ starker Störung des Funkkanals noch möglich, wobei die Entfernungsmessung bei derartigen Störungen unmöglich oder sehr ungenau wird oder sehr viel Zeit benötigt. Klar von der Genauigkeit einer Zeitsynchronisation zu unterscheiden ist die Synchronisation auf einen Takt eines empfangenen Signals am Empfänger des Signals. Hier findet keine Synchronisation zweier Uhren an zwei Objekten statt, sondern wird das empfangene Objekt so eingestellt, dass es mit dem eingehenden Signal synchronisiert ist. Dabei spielt die Signallaufzeit keine Rolle, da dafür unbeachtlich ist, wann das Signal gesendet wurde und/oder wie lange es zur Übertragung benötigt hat.

Auch ist es aus der WO 2020/165134 A1 bekannt mittels einer Bestimmung der Phasenlage eines ersten Signals an einem zweiten Objekt und einer Bestimmung der Phasenlage eines zweiten Signals am zweiten Objekt die Entfernung zwischen den beiden Objekten aufgrund der an beiden Objekten empfangenen Signal zu messen.

Auch ist es bekannt mit mathematischen Methoden wie CAPON oder MUSIK eine Entfernung aus einer Autokorrelationsmatrix eines Signalrundlaufes zu berechnen.

Dabei werden die Phasenverschiebungen von Signalhin- und Signalrücklauf, in der Regel nach näherungsweiser Korrektur eines 180° Mehrdeutigkeitsproblems, addiert. Aus den dadurch und eine Bestimmung einer Amplitude erstellten komplexen Messwerten wird dann eine Autokorrelationsmatrix erstellt, auf deren Basis dann eine Entfernung berechnet wird.

Es ist zur Beschleunigung der Bestimmung des Abstandes und/oder zur Erhöhung der Genauigkeit der Bestimmung des Abstandes zwischen zwei Objekten und/oder bei Störung des Empfangs wünschenswert, die Abstandsbestimmung unter weitgehendem Verzicht auf die Funksignale einer Übertragungsrichtung durchzuführen. Es ist Aufgabe der vorliegenden Erfindung die Abstandsbestimmung zu beschleunigen, mit höherer Genauigkeit zu ermöglichen und/oder auch bei, insbesondere jeweils einseitiger und/oder asymmetrischer, Störung der Funkverbindung zu ermöglichen oder zu verbessern.

Gelöst wird die Aufgabe durch ein Verfahren nach Anspruch 1, eine Verwendung nach Anspruch 2 und einem Objektpaar nach Anspruch 13.

Der Erfinder hat überraschend festgestellt, dass zwischen zeit- und/oder taktsynchronisierten Objekten, insbesondere bei phasenkohärentem Frequenzwechsel, der Verzicht auf eine Übertragungsrichtung möglich ist. Dies sorgt auch dafür, dass ohne Genauigkeitsverzicht, ein Frequenzhopping eines Objekts gefolgt von einem Frequenzhopping eines zweiten der Objekte durchgeführt werden kann, anstelle die Sender- und Empfängerrolle häufig zu wechseln. Unter einem Frequenzhopping ist insbesondere das aufeinander folgende Senden auf unterschiedlichen Frequenzen zu verstehen. Dies sorgt für eine schnellere Messung, da auch Umschaltzeiten der Transceiver weitgehend verzichtet werden kann und ermöglicht die Entfernungsbestimmung auch bei starker Störung des Funkkanals.

Zudem ermöglich es, einer Vielzahl von Objekten die Entfernungen untereinander schnell und genau zu bestimmen, da das Frequenzhopping eines jeden der Objekte von allen anderen der Objekte zur Entfernungsbestimmung genutzt werden kann.

Gelöst wird die Aufgabe durch ein Verfahren zur Abstandsbestimmung zwischen zwei oder mehreren Objekten, wobei die Objekte, insbesondere auf 10ns oder besser, insbesondere im Bereich zwischen 10ns und 100ps, zeit- und/oder taktsynchronisiert sind und wobei ein erstes Objekt auf mehreren Frequenzen Signale abstrahlt und ein zweites Objekt diese Signale empfängt und daraus die Entfernung zwischen erstem und zweitem Objekt bestimmt wird, wobei die Mehrdeutigkeit mittels einer Laufzeitmessung, insbesondere Pulslaufzeitmessung, beseitig wird.

Gekennzeichnet ist das Verfahren zur Abstandsbestimmung zwischen mindestens zwei Objekten, wobei die mindestens zwei Objekte zeit- und/oder taktsynchronisiert sind und wobei ein erstes auf einer ersten und einer zweiten Frequenz je mindestens ein Signal abstrahlt und ein zweites Objekt die Signale des ersten Objekts empfängt und daran Phasenmessungen vornimmt, dadurch, dass das erste Objekt zwischen der ersten und der zweiten Frequenz phasenkohärent, also mit einem Phasensprung von null, wechselt und/oder so wechselt, dass der Phasensprung beim Wechsel der Frequenzen beim Senden bekannt ist und/oder ermittelt wird, und dadurch, dass aus der durch den Wechsel der Frequenz von der ersten zu der zweiten Frequenz bedingten Phasenveränderung die Entfernung zwischen erstem und zweitem Objekt bestimmt und dass mittels einer Signallaufzeitmessung zwischen erstem und zweitem Objekt, und mittels der Kenntnis über mindestens einen Zeitpunkt der Abstrahlung von Merkmalen der Signale die Mehrdeutigkeit der Entfernungsbestimmung beseitigt wird. Dazu wird die Kenntnis über mindestens einen Zeitpunkt der Abstrahlung von Merkmalen der Signale des ersten Objekts die Signallaufzeit bestimmt, insbesondere dadurch, dass ermittelt wird, wann ein Merkmal am zweiten Objekt empfangen wird und die Differenz zwischen Zeitpunkt des Empfangs und der Abstrahlung gebildet wird. Gelöst wird die Aufgabe auch durch eine Verwendung einer Signallaufzeit zwischen einem ersten und einem zweiten Objekt zur Beseitigung der Mehrdeutigkeit einer Entfernungsmessung, wobei die Entfernungsmessung auf der Veränderung der Phasenverschiebung, insbesondere relativ zur Frequenzänderung, der Signalausbreitung von dem ersten zum zweiten Objekt basiert, die auf Grund einer Frequenzänderung entsteht.

Der durch die Frequenzänderung bedingte oder dadurch entstehende Phasenwechsel ist dadurch bedingt, dass bei, insbesondere näherungsweise gleicher Entfernung bei beiden Messungen, unterschiedlich viele Wellenzüge auf die Entfernung passen und dadurch die Phasenverschiebung, die durch die Entfernung bedingt ist, zwischen den Frequenzen unterschiedlich ausfällt. Diese Änderung der Phasenverschiebung auf Grund der Frequenz ist der durch die Frequenzänderung bedingte Phasenwechsel. Beim Messen ergeben sich dabei Probleme, denn die Phasenmessung ist jeweils abhängig von einer Referenz und kann auch beim Umschalten zum Senden der unterschiedlichen Frequenzen ein, häufig undefinierter, Phasensprung entstehen. Somit wird zum Senden, und insbesondere auch zum Empfangen, bevorzugt phasenkohärent, also mit einem Phasensprung von null, umgeschaltet. Es reicht aber auch aus, den Phasensprung zu ermitteln oder zu kennen. Dann kann man die durch die Frequenzänderung Phasenänderung bestimmen durch die gemessene Phasenänderung korrigiert um den Phasensprung bei der Umschaltung des Senders und den Phasensprung beim Umschalten am Empfänger zur Messung der gemessenen Phasenänderung.

Die Entfernung kann dabei beispielsweise mittels Entfernung = (Phasenverschiebung zwischen zwei Frequenzen) / 2Pi / (Unterschied zwischen den zwei Frequenzen) * c mit c gleich der Lichtgeschwindigkeit

Die Entfernungsbestimmung auf Basis dieser Phasenveränderung weist eine Mehrdeutigkeit auf, die insbesondere entsteht, sobald die Entfernung = c/(Unterschied zwischen erster und zweiter Frequenzen) erreicht wird, wobei c die Lichtgeschwindigkeit ist. Diese Mehrdeutigkeit kann durch eine Laufzeitmessung aufgelöst werden, da diese in der Regel genauer sind als Entfernung = c/(Unterschied zwischen erster und zweiter Frequenz). Insbesondere wird die Laufzeitmessung mit einer Genauigkeit besser als c/(Unterschied zwischen erster und zweiter Frequenz) durchgeführt. Das kann durch Wahl entsprechender Güte der Messvorrichtungen erreicht werden, insbesondere durch die Wahl entsprechend genauer Zeitgeber und/oder entsprechend genaue Zeitsynchronisation und/oder Zeitdriftkorrektur. Entsprechende Methoden sind aus dem Stand der Technik bekannt.

Mit Vorteil wird die zeitliche Synchronisation zwischen erstem und zweitem Objekt mit einer Genauigkeit von besser als 2 $\mu$s, insbesondere im Bereich von 0,1 bis 2$\mu$s herbeigeführt und/oder ist sie entsprechend gegeben. Die zeitliche Synchronisation liegt insbesondere im Bereich von 0,01 bis 10 ns, insbesondere im Bereich von 0,05 bis 5 ns und/oder wird die Drift der Zeitgeber im ersten und dritten Objekt bestimmt und bei der Laufzeitmessung berücksichtigt, insbesondere liegt die Genauigkeit der Driftbestimmung im Bereich von 0,1 bis 100ppb, insbesondere im Bereich von 1 bis 10 ppb. Dies lässt sich durch die phasenkohärente Umschaltung erreichen und deren Auswertung am Empfänger erreichen. Insbesondere sendet dazu das zweite Objekt mindestens ein Signal bei einer ersten Frequenz und bei einer zweiten Frequenz, die nicht mit denen des ersten Objekts übereinstimmen müssen, dies aber bevorzugt tun, und wechselt zwischen diesen phasenkohärent, also mit einem Phasensprung von null, und/oder so, dass der Phasensprung beim Wechsel der Frequenzen beim Senden bekannt ist und/oder ermittelt wird.

Der Phasenunterschied oder Phasensprung entsteht beim Umschalten zwischen zwei Frequenzen in der Regel, aus technischen Gründen, kann aber auch vermieden werden. Dabei kann das Umschalten zwischen zwei Frequenzen mit kurzer Unterbrechung oder unterbrechungsfrei durchgeführt werden. Zum Zeitpunkt des unterbrechungsfreien Wechsels springt die Phase bzw. während des Wechselns mit Unterbrechung springt die Phase der gedacht in die Unterbrechung fortgedachten Signale vor und nach dem Umschalten. Zu dem Wechselzeitpunkt ohne Unterbrechung oder zu einem gedachten Wechselzeitpunkt in der Unterbrechung, insbesondere in der Mitte der Unterbrechung und/oder am Ende des Signals vor der Unterbrechung oder am Beginn des Signals nach der Unterbrechung, liegt ein definierter Phasensprung vor. Dieser ist der Phasenunterschied.

Mit besonderem Vorteil wechseln das erste und zweite Objekt zwischen erster und zweiter Frequenz phasenkohärent und/oder so, dass der Phasensprung beim Wechsel der Frequenzen beim Senden und/oder zum Empfang bekannt ist und/oder ermittelt wird und insbesondere die beim Empfang gemessenen Phasen um diesen Phasensprung oder diese Phasensprünge korrigiert werden.

Mit besonderem Vorteil wird das Verfahren mit einer Mehrzahl von Paaren erster und zweiter Frequenz wiederholt durchgeführt. Dadurch kann die Genauigkeit erhöht werden, beispielsweise durch Mittelung und/oder Reduzierung der Mehrdeutigkeit.

Vorteilhafterweise bleiben bei der Abstandsbestimmung, und somit insbesondere bei der Bildung von Messwertvektoren und Autokorrelationsmatrizen, Signalanteile des ersten Objekts bei Frequenzen mit weniger als 40% oder zumindest Signale mit weniger als 20%, insbesondere weniger als 40%, der mittleren Energie der Signale und/oder Signale mit mehr als 140%, insbesondere mehr als 120%, der mittleren Energie unberücksichtigt, werden sie also ausgelassen. Dadurch lassen sich der Einfluss von Störungen und Ungenauigkeiten der verwendeten Elektronikbauteile weiter reduzieren.

Bevorzugt führen eine Vielzahl von Objekten, das Verfahren gemeinsam durch. Dadurch lässt sich Energie und Zeit einsparen.

Abstand und Entfernung werden synonym für die Distanz zwischen zwei Objekten genutzt.

Unter Merkmalen des Signals sind insbesondere Änderungen des Signals zu verstehen, wie Änderung der Amplitude, der Polarisation, der abstrahlenden Antenne (Wechsel zwischen Antennen), der Frequenz und/oder Phase. Es können aber auch aggregierte Gruppen von Merkmalen verwendet werden, die in manchen Situationen die Robustheit des Verfahrens steigern. So können beispielsweise aufmodulierte Pakete oder Syncworte als Gruppen von Merkmalen verwendet werden

Gekennzeichnet ist die Erfindung auch dadurch, dass zur Bestimmung der Phasenänderung und der Entfernung nur die Signale, die das erste Objekt gesendet hat verwendet werden.

Insbesondere sendet das erste Objekt ein Frequenzhopping, indem sie insbesondere näherungsweise gleiche Frequenzen senden, wobei die Reihenfolge dieser Frequenzen im Frequenzhopping des ersten und zweiten Objekts nicht entscheidend ist. Näherungsweise gleich sind die Frequenzen insbesondere bei einem Unterschied von weniger als 5%, insbesondere weniger als 1 %, der niedrigeren Frequenz und/oder weniger als 17 MHz, insbesondere weniger als 10 MHz, insbesondere weniger als 9 MHz, insbesondere weniger als 2 MHz. So kann beispielsweise Objekt A die Frequenzen FA1, FA2 bis FAn und Objekt B die Frequenzen FB1, FB2 bis FBn verwenden, wobei gilt 95% FAx < =FBx < = 105% FAx mit x von 1 bis n verwenden.

Insbesondere wird das Verfahren beim Senden des ersten Objekts mit umgekehrten Rollen des ersten und zweiten Objekts durchgeführt.

Unter einem Frequenzhopping ist insbesondere das aufeinanderfolgende Senden auf unterschiedlichen Frequenzen zu verstehen, von denen insbesondere immer Paare eine erste und eine zweite Frequenz darstellen.

Insbesondere liegen die Frequenzen, insbesondere der/des Frequenzhopping(s), in einer Spanne von 25 bis 100 MHz, insbesondere überspannen Sie eine solche Spanne vollständig. Insbesondere liegen die Frequenzen, insbesondere des Frequenzhoppings, im Bereich von 2 bis 6 GHz. Insbesondere liegt zwischen benachbarten aber nicht notwendig aufeinanderfolgenden Frequenzen, insbesondere des Frequenzhoppings, bzw. zwischen erster und zweiter Frequenz ein Abstand im Bereich von 0,1 bis 17 MHz, insbesondere im Bereich von 0,5 bis 10 MHz.

Unter phasenkohärentem Umschalten oder Wechsel zwischen zwei Frequenzen wird insbesondere verstanden, dass die Phase nach der Umschaltung relativ zur Phasenlage vor der Umschaltung bekannt ist. Dies ist der Fall, wenn die Veränderung der Phase beim Umschalten null ist oder einen vorbekannten Wert beträgt oder am Sender gemessen wird. Dadurch lassen sich weitere Messungen der Phase am Sender vermeiden und die Berechnung vereinfachen, insbesondere wenn ohne Phasenveränderung zwischen Frequenzen gewechselt wird. Mit Vorteil schaltet nicht nur das sendende Objekt phasenkohärent, sondern auch das Empfangende, insbesondere wird in jedem Objekt eine PLL phasenkohärent geschaltet.

Hilfsweise kann bevorzugt aber auch nicht phasenkohärent geschaltet und die Änderung der Phase lokal, insbesondere also beim Sender vor der Übertragung und/oder beim Empfänger bezüglich der PLL des Empfängers, bestimmt werden und diese Änderung in der Berechnung korrigiert werden.

Beispielsweise kann bei Kenntnis des Zeitpunktes des phasenkohärenten Wechsels oder des Wechsels mit gemessenem Phasensprung am sendenden Objekt und bei Bestimmung des Wechsels im empfangenen Signal am empfangenen Objekt die Zeit zwischen Senden und Empfang des Wechsels bestimmt werden, die die Signallaufzeit (ToF) darstellt, und auch die Phasenverschiebung bestimmt werden, die sich allein aus dem Signallauf ergibt. Aus der Signallaufzeit lässt sich mittels der Lichtgeschwindigkeit direkt die Entfernung bestimmten. Über die Phasenverschiebung ist dies, jedoch mit einer Mehrdeutigkeit, ebenfalls möglich, was in der Regel genauer ist. Durch Nutzung mehrerer Frequenzen lässt sich die Mehrdeutigkeit bei der phasenbasierten Messung reduzieren. Durch die Kombination der signallaufzeit- und phasenbasierten Messungen lässt sich eine besonders genaue und robuste Entfernungsmessung realisieren.

Die Signale sind insbesondere Funksignale.

Es wurde zudem überraschend festgestellt, dass die aus der hier beschriebenen einseitigen oder erfindungsgemäßen Entfernungsmessung gewonnene Entfernungen bei der Verwendung handelsüblicher Transceiver wie z.B. der schon etwas ältere cc2500 oder der aktuelle cc26xx von Texas Instruments oder der Kw35/36/37/38 von NXP oder der DA1469x von Dialog abhängig sind von der zur Entfernungsbestimmung verwendeten Frequenz. Dabei scheinen Ungenauigkeiten in den Transceivern auch zu errechneten Entfernungen unterhalb der tatsächlichen Entfernung zu führen, dies aber nur bei solchen Frequenzen, deren Übertragungskanal stark gedämpft ist, sodass diese problemlos bei der Berechnung eliminiert werden können.

Somit ist es vorteilhaft bei der Abstandsbestimmung Signalanteile des Objekts, dessen Signale zur Abstandsbestimmung genutzt werden, teilweise nicht zur Abstandsbestimmung zu nutzen und zwar, solche Anteile nicht zu nutzen, die oberhalb einer Leistungsobergrenze liegen und/oder solche Anteile nicht zu nutzen, die unterhalb einer Leistungsuntergrenze liegen. Diese Grenzen können vorbestimmt sein oder aus den empfangenen Signalen bestimmt werden und insbesondere oberhalb bzw. unterhalb der mittleren Empfangenen Leistung liegen und zwar insbesondere mindestens 20% oberhalb der mittleren Empfangsleistung (Leistungsobergrenze) und/oder mindestens 20% unterhalbe der mittleren Empfangsleistung (Leistungsuntergrenze) liegen.

Bevorzugt werden Signalanteile bei Frequenzen mit weniger als 40% oder zumindest Signale mit weniger als 20%, insbesondere weniger als 40%, der mittleren Energie der Signale und/oder Signale mit mehr als 140%, insbesondere mehr als 120%, der mittleren Energie empfangen wurden, nicht berücksichtigt.

Mit Vorteil liegt die Leistungsuntergrenze im Bereich von 5 bis 50% der mittleren Leistung der empfangenen Signale und/oder die Leistungsobergrenze im Bereich von 120 bis 200% der mittleren Leistung der empfangenen Signale.

In einer anderen Ausgestaltung werden aus den, insbesondere in der Entscheidung ausgewählten, Signalen die x% der Signale mit kleinster empfangener Amplitude aussortiert und nicht verwendet und/oder die y% der Signale mit größter empfangener Amplitude aussortiert und nicht verwendet. Als besonders vorteilhaft hat es sich erwiesen, wenn die Summe aus x und y 10 nicht unterschreitet und/oder 75 nicht überschreitet und/oder x im Bereich von 10 bis 75 und/oder y im Bereich von 20 bis 50 liegt. Mit diesen Werten lässt sich in den meisten Situationen eine hohe Genauigkeit und eine zuverlässige Abstandsbestimmung erreichen.

Bevorzugt sendet das erste Objekt die Signale auf mehreren Frequenzen nacheinander und/oder aufeinanderfolgend, insbesondere unmittelbar aufeinanderfolgend. Arbeitet man mit mehreren Objekten, senden sie insbesondere alle nacheinander, insbesondere jeweils ein Frequenzhopping. Dadurch lassen sich unter anderem Einflüsse von Umgebungs- oder Entfernungsänderungen und von Bewegungen eines Objekts reduzieren.

Mit Vorteil übersteigt die Bandbreite der Signale zu keiner Zeit 50 MHz, insbesondere 25 MHz. Dadurch lässt sich Energie einsparen, lassen sich Störungen anderer Prozesse vermeiden und gegenüber breitbandigen Verfahren einfache Bauteile nutzen.

Bevorzugt wird vor, nach und/oder während der Durchführung des Verfahrens mindestens eine Zeit- und/oder Taktsynchronisation und/oder -korrektur zwischen den zwei Objekten durchgeführt. Dies erhöht die Genauigkeit des Verfahrens. Bevorzugt wird auch eine Drift der Uhr des ersten und/oder zweiten Objekts oder einen Unterschied in der Drift der Uhren des ersten und des zweiten Objekts bestimmt und bei der Abstandsbestimmung bzw. Laufzeitmessung berücksichtigt. Dies erhöht die Genauigkeit des Verfahrens.

Auch die Drift der Oszillatoren kann für die Phasenmessung wie im Stand der Technik bekannt korrigiert werden und verbessert die Genauigkeit weiter.

Mit Vorteil wird das Verfahren so geführt, dass der Frequenzabstand zwischen zwei aufeinander folgenden der mehreren Frequenzen mindestens 0,1 MHz und/oder maximal 17 MHz, insbesondere maximal 10 MHz beträgt und/oder die mehreren Frequenzen mindestens fünf Frequenzen und/oder maximal 200 Frequenzen darstellen und/oder wobei die mehren Frequenzen ein Frequenzband von mindestens zwei MHz und/oder maximal 100 MHz überspannen. Dadurch lässt sich ein ausgewogenes Maß zwischen Bandbreitenerfordernis, welches Anforderungen an verfügbare Frequenzen und Hardware stellt, und Genauigkeit finden. Bevorzugt wird das Verfahren so geführt, dass die Genauigkeit der Entfernungsbestimmung auf Grund der Laufzeitmessung im Bereich von 0,3 m bis 3 m liegt, insbesondere zumindest für Abstände im Bereich von 0 bis 50 m. In diesen Bereichen kommen die Vorteile der Erfindung besonders deutlich zum Tragen.

Es wird bevorzugt, bekannte hochauflösende Methoden, wie beispielsweise MU-SIC oder CAPON, anzuwenden, die auf Basis einer, insbesondere komplexen, Autokorrelationsmatrix eine Entfernung berechnen können. Mit Vorteil wird für jedes am zweiten und/oder ersten Objekt empfangene Signal, das nicht unberücksichtigt bleiben soll, ein zu dessen Amplitude proportionalen Wert und ein Phasenwert bestimmt und insbesondere daraus, gegebenenfalls nach Korrektur eines Phasensprungs beim Frequenzwechsels oder eines bestimmbaren Phasenmessfehlers auf Grund von Drift der Zeitgeber oder Frequenzgeber, jeweils eine komplexe Zahl bestimmt, aus denen mindestens ein Messwertvektor aufgebaut wird, aus dem jeweils eine Autokorrelationsmatrix erstellt wird. Insbesondere werden die Autokorrelationsmatrizen eines Objektes, insbesondere solche des Empfangs eines Frequenzhoppings eines anderen Objekts aufsummiert. Insbesondere wird die, ggf. aufsummierte, Autokorrelationsmatrix des Empfangs des Frequenzhoppings des Objekts X am Objekt Y mit der, ggf. aufsummierten, Autokorrelationsmatrix des Empfangs des Frequenzhoppings des Objekts Y am Objekt X aggregiert, insbesondere summiert und diese aggregierte Autokorrelationsmatrix für die Entfernungsbestimmung zwischen Objekt X und Y genutzt. Mit Vorteil erfolgt die Abstandsberechnung im virtuellen Raum mittels Eigenwert oder Eigenvektorenbestimmung der mindestens einen Autokorrelationsmatrix und/oder Fouriertransformation der komplexen Werte.

Derartige Vorgehensweisen sind insbesondere bei Multipath-Signalausbreitung vorteilhaft, um eine zuverlässige Bestimmung zu erreichen.

Mit Vorteil wird aus mehreren Abstandsbestimmungen ein Mittelwert und/oder werden die Messungen gemittelt um einen Abstandswert zu bestimmen.

Wenn eine Ortung angestrebt wird, ist es vorteilhaft, das erfindungsgemäße Verfahren zwischen einer Mehrzahl von Paaren von Objekten durchzuführen, wobei insbesondere ein Objekt jedes Paares ein Objekt ist, dass an allen Paaren beteiligt ist, und wobei die ermittelten Abstände der Paare benutzt werden, um eine Kartierung und/oder Positionsbestimmung mindestens eines der Objekte durchzuführen. Insbesondere ist es vorteilhaft diese paarweisen Messungen dann gleichzeitig zu machen, wobei nicht gleichzeitig gesendet wird, sondern alle Objekte mindestens ein Frequenzhopping, insbesondere unmittelbar aufeinander folgend durchführen.

Gelöst wird die Aufgabe auch durch zwei Objekte eingerichtet mit Sende- und Empfangsmitteln und einer Steuerung, eingerichtet zur Durchführung des erfindungsgemäßen Verfahrens.

Mit Vorteil sind die Objekte Teile eines Datenübertragungssystems, insbesondere eines Bluetooth, WLAN oder Mobilfunk Datenübertragungssystems. Bevorzugt sind die Signale Signale des Datenübertragungssystems, insbesondere eines Datenübertragungsstandards, beispielsweise Mobilfunkstandard, WLAN oder Bluetooth, die zur Datenübertragung gemäß des Datenübertragungsstandards genutzt werden.

Vorteilhafterweise werden die Signale über mehrere Antennenpfade, insbesondere mindestens drei, übertragen, insbesondere mit mehreren Antennen, insbesondere nacheinander, am sendenden Objekt gesendet und/oder mit mehreren Antennen am empfangenen Objekt empfangen.

Die Berechnung erfolgt beispielsweise wie folgt: Es werden bei der Mittelung der gemessenen Entfernungen die Messungen der empfangenen Signale mit weniger als z.B. 40% der mittleren Energie der empfangenen Signale ignoriert. Damit werden Messungen auf Frequenzen mit stark gedämpftem Übertragungskanal ausgeklammert.

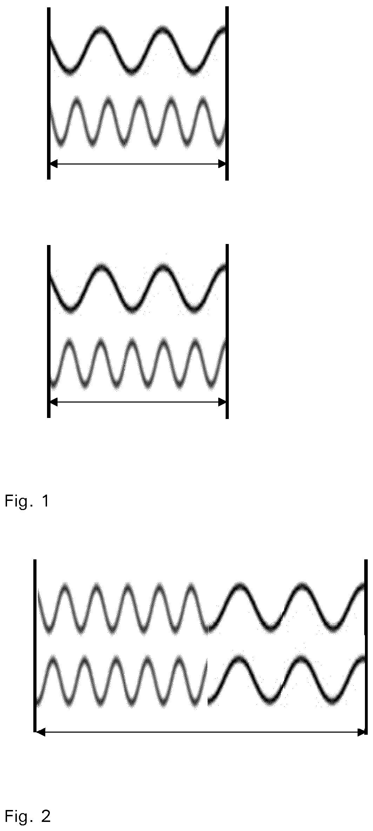

Fig. 1 zeigt rein exemplarisch und schematisch eine Veranschaulichung der Veränderung der Phasenverschiebung durch eine Frequenzänderung. Zwischen zwei Objekten, durch jeweils einen senkrechten Strich gekennzeichnet mit einem durch einen Doppelpfeil gekennzeichneten Abstand, ist in der oberen Darstellung eine Welle bei einer niedrigeren Frequenz (oben) und eine Welle bei einer niedrigeren Frequenz (darunter) gezeigt. Zu erkennen ist, dass die Phasenveränderung vom Sender zum Empfänger bei den Frequenzen unterschiedlich ausfällt. Im unteren Bild ist die untere Welle phasenverschoben dargestellt, um die Änderung der empfangenen Phase auch auf Grund der Sendephase zu verdeutlichen.

Fig. 2 verdeutlicht den Einfluss des Phasensprungs bei der Umschaltung. In Figur 2 sind wieder rechts und links jeweils ein Objekt als senkrechte Striche und dazwischen ihr Abstand durch einen Doppelpfeil veranschaulicht. In der Fig. 2 oben ist eine phasenkohärente Frequenzumschaltung veranschaulicht, in der Fig. 2 unten eine Umschaltung mit Phasensprung. Es ist zu erkennen, dass der Phasensprung eine Auswirkung auf die Änderung Phasendifferenz zwischen der Phase am ersten und am zweiten Objekt bei der Umschaltung der Frequenzen hat. Diese ist aber bei Kenntnis des Phasensprungs rechnerisch korrigierbar.

**Patentansprüche**

1. Verfahren zur Abstandsbestimmung zwischen mindestens zwei Objekten, wobei die mindestens zwei Objekte zeit- und/oder taktsynchronisiert sind und wobei ein erstes Objekt auf einer ersten und einer zweiten Frequenz je mindestens ein Signal abstrahlt und ein zweites Objekt die Signale des ersten Objekts empfängt und daran Phasenmessungen vornimmt, wobei das erste Objekt zwischen der ersten und der zweiten Frequenz phasenkohärent mit einem Phasensprung von null wechselt und/oder so wechselt, dass der Phasensprung beim Wechsel der Frequenzen beim Senden bekannt ist und/oder ermittelt wird, wobei aus der durch den Wechsel der Frequenz von der ersten zu der zweiten Frequenz bedingten Phasenveränderung zwischen den am zweiten Objekt gemessen Phasen für die erste Frequenz und zweite Frequenz die Entfernung zwischen erstem und zweitem Objekt bestimmt wird,
   **dadurch gekennzeichnet, dass**
   zur Bestimmung der Phasenänderung und Entfernung nur die Signale, die das erste Objekt gesendet hat, verwendet werden, und dass mittels der Kenntnis über mindestens einen Zeitpunkt der Abstrahlung von Merkmalen der Signale des ersten Objekts eine Signallaufzeit als Differenz zwischen dem Zeitpunkt der Abstrahlung und einem Empfangszeitpunkt am zweiten Objekt bestimmt wird und die Mehrdeutigkeit der Entfernungsbestimmung mittels der bestimmten Signallaufzeit beseitigt wird.

2. Verwendung einer Signallaufzeit zwischen einem ersten Objekt und einem zweiten Objekt zur Beseitigung der Mehrdeutigkeit einer Entfernungsmessung, wobei das erste und zweite Objekt zeit- und/oder taktsynchronisiert sind, wobei zu dieser Entfernungsmessung das erste Objekt auf einer ersten und einer zweiten Frequenz je mindestens ein Signal abstrahlt, wobei die Entfernungsmessung auf der Veränderung der Phasenverschiebung zwischen der ersten Frequenz und der zweiten Frequenz der Signalausbreitung von dem ersten zum zweiten Objekt basiert, die auf Grund einer Frequenzänderung entsteht, wobei das erste Objekt zwischen der ersten und der zweiten Frequenz phasenkohärent mit einem Phasensprung von null wechselt und/oder so wechselt, dass der Phasensprung beim Wechsel der Frequenzen beim Senden bekannt ist und/oder ermittelt wird, **dadurch gekennzeichnet, dass** die Signallaufzeit als Differenz zwischen einem Abstrahlzeitpunkt am ersten Objekt und einem Empfangszeitpunkt am zweiten Objekt bestimmt wird und die Mehrdeutigkeit der Entfernungsmessung beseitigt, und **dass** zur Bestimmung der Phasenänderung und Entfernung nur die Signale, die das erste Objekt gesendet hat, verwendet werden.

3. Verfahren oder Verwendung nach einem der vorstehenden Ansprüche, wobei bei der Abstandsbestimmung Signalanteile des ersten Objekts bei Frequenzen mit weniger als 40% oder zumindest Signale mit weniger als 20%, insbesondere weniger als 40%, der mittleren Energie der Signale und/oder Signale mit mehr als 140%, insbesondere mehr als 120%, der mittleren Energie unberücksichtigt bleiben.

4. Verfahren nach einem der vorstehenden Ansprüche, wobei eine Vielzahl von Objekten das Verfahren gemeinsam durchführen.

5. Verfahren nach einem der vorstehenden Ansprüche, wobei das erste der zwei Objekte die Signale auf mehreren Frequenzen nacheinander und/oder aufeinanderfolgend, insbesondere unmittelbar aufeinanderfolgend, abstrahlt und/oder wobei die Bandbreite der Signale zu keiner Zeit 50 MHz, insbesondere 25 MHz, übersteigt.

6. Verfahren nach einem der vorstehenden Ansprüche, wobei vor, nach und/oder während der Durchführung des Verfahrens mindestens eine Zeit- und/oder Taktsynchronisation und/oder -korrektur zwischen den zwei Objekten durchgeführt wird.

7. Verfahren nach einem der vorstehenden Ansprüche 5 oder 6, wobei der Frequenzabstand zwischen zwei aufeinander folgenden der mehreren Frequenzen mindestens 0,1 MHz und/oder maximal 17 MHz beträgt und/oder die mehreren Frequenzen mindestens fünf Frequenzen und/oder maximal 200 Frequenzen darstellen und/oder wobei die mehreren Frequenzen ein Frequenzband von mindestens zwei MHz und/oder maximal 100 MHz überspannen.

8. Verfahren oder Verwendung nach einem der vorstehenden Ansprüche, wobei die Genauigkeit der Laufzeitmessung im Bereich von 0,3 m bis 3 m liegt, insbesondere zumindest für Abstände im Bereich von 0 bis 50 m.

9. Verfahren oder Verwendung nach einem der vorstehenden Ansprüche, wobei eine Zeitdrift mindestens eines, insbesondere beider der beiden Objekte und/oder zwischen den beiden Objekten bestimmt und/oder korrigiert wird und/oder bei der Berechnung des Abstandes berücksichtigt wird.

10. Verfahren oder Verwendung nach einem der vorstehenden Ansprüche, wobei ein Mittelwert aus mehreren Abstandsbestimmungen ermittelt wird.

11. Verfahren oder Verwendung nach einem der vorstehenden Ansprüche, wobei bei der Abstandsbestimmung am zweiten Objekt empfangene Signale mit einer empfangenen Leistung unterhalb einer vorbestimmten und/oder, insbesondere aus oder unter Berücksichtigung der empfangenen Signale, ermittelten Leistungsuntergrenze unberücksichtigt bleiben, insbesondere solche Signale unberücksichtigt bleiben, die mehr als 50% unter der mittleren Leistung der empfangenen Signale liegen und/oder wobei bei der Abstandsbestimmung am zweiten Objekt empfangene Signale mit einer Leistung oberhalb einer vorbestimmten und/oder, insbesondere aus oder unter Berücksichtigung der empfangenen Signale, ermittelten Leistungsobergrenze unberücksichtigt bleiben.

12. Verfahren nach einem der vorstehenden Ansprüche, wobei das Verfahren nach einem der vorstehenden Verfahren zwischen einer Mehrzahl von Paaren von Objekten durchgeführt, wird, wobei insbesondere ein Objekt jedes Paares ein Objekt ist, dass an allen Paaren beteiligt ist, und wobei die ermittelten Abstände der Paare benutzt werden, um eine Kartierung und/oder Positionsbestimmung durchzuführen.

13. Objektpaar eingerichtet zur Durchführung des Verfahrens nach einem der vorstehenden Ansprüche.

**Claims**

1. A method for determining the distance between at least two objects, wherein said at least two objects are time- and/or clock-synchronised, and wherein a first object transmits at least one signal at a first and a second frequency, and a second object receives the signals from the first object and performs phase measurements thereon, wherein the first object switches between the first and second frequencies in a phase-coherent manner with a phase shift of zero and/or switches in such a way that the phase shift upon switching frequencies during transmission is known and/or determined, whereby the distance between the first and second objects is determined from the phase change caused by the change in frequency from the first to the second frequency between the phases measured at the second object for the first frequency and the second frequency,
**characterised in that**
only the signals transmitted by the first object are used to determine the phase change and distance, and that, by means of knowledge of at least one time of emission of features of the signals from the first object, a signal propagation time is determined as the difference between the time of emission and a time of reception at the second object, and the ambiguity in the distance determination is resolved by means of the determined signal propagation time.

2. A use of a signal transit time between a first object and a second object to eliminate the ambiguity of a distance measurement, wherein the first and second objects are time- and/or clock-synchronised, wherein, for this distance measurement, the first object emits at least one signal at a first and a second frequency, wherein the distance measurement is based on the change in the phase shift between the first frequency and the second frequency of the signal propagation from the first to the second object, which arises due to a frequency change, wherein the first object switches between the first and second frequencies in a phase-coherent manner with a phase shift of zero and/or switches in such a way that the phase shift upon the change of frequencies during transmission is known and/or determined,
**characterised in that**
the signal transit time is determined as the difference between a transmission time at the first object and a reception time at the second object, thereby eliminating the ambiguity of the distance measurement, and **that** only the signals transmitted by the first object are used to determine the phase change and distance.

3. A method or use according to any of the preceding claims, wherein, during distance determination, signal components of the first object at frequencies comprising less than 40%, or at least signals comprising less than 20%, in particular less than 40%, of the average energy of the signals, and/or signals comprising more than 140%, in particular more than 120%, of the average energy, are disregarded.

4. A method according to any of the preceding claims, wherein a plurality of objects carries out the method jointly.

5. A method according to one of the preceding claims, wherein the first of the two objects transmits the signals at several frequencies one after the other and/or successively, in particular immediately one after the other, and/or wherein the bandwidth of the signals does not exceed 50 MHz, in particular 25 MHz, at any time.

6. A method according to one of the preceding claims, wherein, before, after and/or during the execution of the method, at least one time and/or clock synchronisation and/or correction is performed between the two objects.

7. A method according to any one of the preceding claims 5 or 6, wherein the frequency spacing between two consecutive ones of the plurality of frequencies is at least 0.1 MHz and/or at most 17 MHz and/or the plurality of frequencies comprises at least five frequencies and/or at most 200 frequencies and/or wherein the plurality of frequencies spans a frequency band of at least 2 MHz and/or at most 100 MHz.

8. A method or use according to any of the preceding claims, wherein the accuracy of the time-of-flight measurement lies in the range from 0.3 m to 3 m, in particular for distances in the range from 0 to 50 m.

9. A method or use according to any of the preceding claims, wherein a time drift of at least one, in particular both, of the two objects and/or between the two objects is determined and/or corrected and/or taken into account in the calculation of the distance.

10. A method or use according to one of the preceding claims, wherein an average value is determined from several distance measurements.

11. A method or use according to one of the preceding claims, wherein, during the distance determination at the second object, received signals with a received power below a predetermined and/or, in particular from or taking into account the received signals, are disregarded, in particular those signals which are more than 50% below the average power of the received signals, and/or wherein, during the distance determination at the second object, received signals with a power above a predetermined and/or, in particular from or taking into account the received signals, are disregarded.

12. A method according to one of the preceding claims, wherein the method is carried out between a plurality of pairs of objects, wherein, in particular, one object of each pair is an object that is involved in all pairs, and wherein the determined distances of the pairs are used to perform mapping and/or positioning.

13. A pair of objects configured to carry out the method according to one of the preceding claims.

**Revendications**

1. Procédé pour déterminer la distance entre au moins deux objets, dans lequel lesdits au moins deux objets sont synchronisés en temps et/ou en horloge, et dans lequel un premier objet émet au moins un signal à une première et une deuxième fréquence, et un deuxième objet reçoit les signaux provenant du premier objet et effectue des mesures de phase sur ceux-ci, dans lequel le premier objet commute entre la première et la deuxième fréquence de manière cohérente en phase avec un déphasage nul et/ou commute de telle sorte que le déphasage lors du changement de fréquence pendant la transmission soit connu et/ou déterminé, la distance entre le premier et le deuxième objet étant déterminée à partir du changement de phase provoqué par le passage de la première à la deuxième fréquence entre les phases mesurées au niveau du deuxième objet pour la première fréquence et la deuxième fréquence,
   **caractérisé en ce que**
   seuls les signaux émis par le premier objet sont utilisés pour déterminer le changement de phase et la distance, et **en ce que**, grâce à la connaissance d'au moins un instant d'émission de caractéristiques des signaux provenant du premier objet, un temps de propagation du signal est déterminé comme étant la différence entre l'instant d'émission et un instant de réception au niveau du deuxième objet, et l'ambiguïté dans la détermination de la distance est résolue au moyen du temps de propagation du signal déterminé.

2. Utilisation d'un temps de transit de signal entre un premier objet et un deuxième objet pour éliminer l'ambiguïté d'une mesure de distance, dans laquelle les premier et deuxième objets sont synchronisés en temps et/ou en horloge, dans laquelle, pour cette mesure de distance, le premier objet émet au moins un signal à une première et une deuxième fréquence, la mesure de distance étant fondée sur la variation du déphasage entre la première fréquence et la deuxième fréquence de la propagation du signal du premier vers le deuxième objet, qui résulte d'un changement de fréquence, le premier objet commutant entre la première et la deuxième fréquence de manière avec un déphasage nul et/ou le commute de telle sorte que le déphasage lors du changement de fréquences pendant la transmission est connu et/ou déterminé,
   **caractérisé en ce que**
   le temps de transit du signal est déterminé comme étant la différence entre un temps de transmission au niveau du premier objet et un temps de réception au niveau du deuxième objet, éliminant ainsi l'ambiguïté de la mesure de distance, et **en ce que** seuls les signaux émis par le premier objet sont utilisés pour déterminer le changement de phase et la distance.

3. Procédé ou utilisation selon l'une quelconque des revendications précédentes, dans lequel, lors de la détermination de la distance, les composantes de signal du premier objet à des fréquences représentant moins de 40 %, ou au moins les signaux représentant moins de 20 %, en particulier moins de 40 %, de l'énergie moyenne des signaux, et/ou les signaux représentant plus de 140 %, en particulier plus de 120 %, de l'énergie moyenne, sont ignorés.

4. Procédé selon l'une quelconque des revendications précédentes, dans lequel une pluralité d'objets met en œuvre le procédé conjointement.

5. Procédé selon l'une des revendications précédentes, dans lequel le premier des deux objets émet les signaux à plusieurs fréquences l'une après l'autre et/ou successivement, en particulier immédiatement l'une après l'autre, et/ou dans lequel la largeur de bande des signaux ne dépasse à aucun moment 50 MHz, en particulier 25 MHz.

6. Procédé selon l'une des revendications précédentes, dans lequel, avant, après et/ou pendant l'exécution du procédé, au moins une synchronisation et/ou une correction de temps et/ou d'horloge est effectuée entre les deux objets.

**7.** Procédé selon l'une quelconque des revendications 5 ou 6 précédentes, dans lequel l'écart de fréquence entre deux fréquences consécutives parmi la pluralité de fréquences est d'au moins 0,1 MHz et/ou d'au plus 17 MHz et/ou la pluralité de fréquences comprend au moins cinq fréquences et/ou au plus 200 fréquences et/ou dans lequel la pluralité de fréquences couvre une bande de fréquences d'au moins 2 MHz et/ou d'au plus 100 MHz.

**8.** Procédé ou utilisation selon l'une quelconque des revendications précédentes, dans lequel la précision de la mesure du temps de vol se situe dans la plage de 0,3 m à 3 m, en particulier pour des distances comprises entre 0 et 50 m.

**9.** Procédé ou utilisation selon l'une quelconque des revendications précédentes, dans lequel une dérive temporelle d'au moins l'un, en particulier des deux, des deux objets et/ou entre les deux objets est déterminée et/ou corrigée et/ou prise en compte dans le calcul de la distance.

**10.** Procédé ou utilisation selon l'une des revendications précédentes, dans lequel une valeur moyenne est déterminée à partir de plusieurs mesures de distance.

**11.** Procédé ou utilisation selon l'une des revendications précédentes, dans lequel, lors de la détermination de la distance au niveau du deuxième objet, les signaux reçus dont la puissance de réception est inférieure à une valeur prédéterminée et/ou, en particulier à partir des signaux reçus ou en tenant compte de ceux-ci, sont ignorés, en particulier les signaux dont la puissance est inférieure de plus de 50 % à la puissance moyenne des signaux reçus, et/ou dans lequel, lors de la détermination de la distance au niveau du deuxième objet, les signaux reçus dont la puissance est supérieure à une valeur prédéterminée et/ou, en particulier à partir des signaux reçus ou en tenant compte de ceux-ci, sont ignorés.

**12.** Procédé selon l'une des revendications précédentes, dans lequel le procédé est mis en œuvre entre une pluralité de paires d'objets, dans lequel, en particulier, un objet de chaque paire est un objet qui est impliqué dans toutes les paires, et dans lequel les distances déterminées des paires sont utilisées pour effectuer une cartographie et/ou un positionnement.

**13.** Paire d'objets configurée pour mettre en œuvre le procédé selon l'une des revendications précédentes.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112014004426 T5

- WO 2020165134 A1

**In der Beschreibung aufgeführte Nicht-Patentliteratur**

- **CASAS et al.** Synchronization in Wireless Sensor Networks Using Bluetooth. *Third International Workshop on Intelligent Solutions in Embedded Systems*, 2005, ISBN 3-902463-03-1